# EUROPÄISCHE PATENTSCHRIFT

(11) **EP 3 490 788 B1**
(45) Veröffentlichungstag und Bekanntmachung des Hinweises auf die Patenterteilung: **01.07.2020**
(21) Anmeldenummer: 17725576.7
(22) Anmeldetag: 23.05.2017
(51) Int. Cl.: B30B 9/12, B29C 48/505, B65G 33/22, B65G 33/26, B04B 1/20

(54) **SCHNECKENPRESSE**
SCREW PRESS
PRESSE À VIS

(30) Priorität: 29.07.2016 AT 506942016
(43) Veröffentlichungstag der Anmeldung: 05.06.2019
(73) Patentinhaber: Andritz AG, 8045 Graz (AT)
(72) Erfinder: GHANIMI, Yassar, 8071 Hausmannstätten (AT)
(86) Internationale Anmeldenummer: PCT/EP2017/062319
(87) Internationale Veröffentlichungsnummer: WO 2018/019444

(56) Entgegenhaltungen:
- EP-A1- 2 848 824
- CN-U- 204 916 997
- DE-A1- 4 408 717
- DE-A1-102011 005 921
- DE-C- 266 077
- DE-U1-202016 001 466
- JP-A- 2006 198 540
- KR-B1- 101 049 965
- US-A- 4 528 098

## Beschreibung

Die Erfindung betrifft eine Schneckenpresse zum Abscheiden von Flüssigkeit aus einem Transportgut, umfassend eine Schneckenwelle samt einer spiralförmig an der Schneckenwelle angeordneten Förderwendel sowie einen diese umgebenden Gehäusemantel, wobei zwischen der Schneckenwelle, der Förderwendel und dem Gehäusemantel ein Transportgang für das zu befördernde Transportgut ausgebildet ist. Weiters wird im Rahmen der Erfindung die Verwendung eines Verbundwerkstoffs in Zusammenhang mit einer Schneckenpresse angegeben.

Bei dem von der Schneckenpresse aufzubereitenden Transportgut handelt es sich üblicherweise um ein Feststoff-Flüssigkeits-Gemisch, beispielsweise um industriell hergestellte Zellstofffasern, aus denen die mit dem Fasermaterial mitgeführte Flüssigkeit durch Pressen abgetrennt werden soll. Ebenso kann es sich bei dem von der Schneckenpresse zu verdichtenden Transportgut beispielsweise um Faserstoff- oder Schlammsuspensionen, Altpapier, Sägespäne, Holzabfälle handeln.

Das Prinzip einer Schneckenpresse ist hinlänglich bekannt: Innerhalb eines zylindrischen oder kegeligen Gehäusemantels ist eine mit einer spiralförmigen Förderwendel ausgerüstete Schneckenwelle gelagert. Der Gehäusemantel weist eine meist mit einem Einfülltrichter ausgestattete Einlassöffnung auf, durch die ein Transportgut kontinuierlich der Schneckenpresse zugeführt wird. In stromabwärtiger Förderrichtung des Transportguts befindet sich im Gehäusemantel eine Auslassöffnung durch welche das Transportgut die Schneckenpresse wieder verlässt. Zwischen dem Gehäusemantel und der Schneckenwelle bzw. der Förderwendel ist ein spiral- bzw. schraubenförmiger Transportgang ausgebildet, welcher einen durchgehenden Transportkanal für das Transportgut von der Einlassöffnung bis zur Auslassöffnung bildet und welcher sich in Förderrichtung zur Auslassöffnung hin kontinuierlich verengt. Es können auch mehrere schraubenförmige Transportgänge vorgesehen sein.

Sobald die Schneckenwelle in Rotation versetzt wird, wird das über die Einlassöffnung in die Schneckenpresse eingebrachte Transportgut von der an der Schneckenwelle angebrachten Förderwendel entlang der Windungen des Transportgangs bis zur Auslassöffnung befördert und dabei kontinuierlich verdichtet und ausgepresst. Die Förderung und der Druckaufbau werden bei Einschnecken- und gleichläufigen Doppelschneckenpressen durch die Friktion der mit der Schnecke rotierenden Masse an dem stehenden zylindrischen Gehäusemantel bewirkt - man spricht in diesem Zusammenhang von Friktionsförderung. Flüssigkeit, die während des Pressvorgangs aus dem Transportgut abgeschieden wird, gelangt durch entsprechende Flüssigkeitsdurchtritte im Gehäusemantel - beispielsweise schlitz- oder lochförmige Flüssigkeitsdurchtritte - zu einer Sammelvorrichtung.

Funktionsbestimmend für eine Schneckenpresse ist die Förderschnecke, also die Schneckenwelle samt der spiralförmig daran befestigten Förderwendel, welche gleichzeitig den Druckaufbau für das zu pressende Transportgut herbeiführt.

Problematisch bei gattungsgemäßen Schneckenpressen ist, dass die Schneckenwelle durch das im Transportgang der Schneckenwelle transportierte Transportgut einem starken Abrieb ausgesetzt ist, weshalb die Oberfläche der Schneckenwelle nach einer gewissen Betriebszeit - abhängig vom Abrasionsgrad des jeweiligen Transportguts - glatt poliert ist. Nachteilig bleiben allerdings gewisse Transportgüter, beispielsweise Zellstofffasern bzw. Faserstoffsuspensionen, an der glatt polierten Schneckenwellenoberfläche haften bzw. verkleben an dieser. Unerwünschter Weise drehen sich damit die Zellstofffasern stärker mit der glatt polierten Schneckenwellenoberfläche mit, als dies vormals an einer rauen Wellenoberfläche der Fall war. Aufgrund dieser Mitrotation bzw. Korotation der Zellstofffasern an der Schneckenwellenoberfläche ergibt sich jedoch eine Effizienzminderung der Schneckenpresse. Weiters kann das Anhaften des Transportguts an der Schneckenwelle eine ungleichmäßige Füllung des Transportgangs bewirken und bis hin zu einer Verstopfung der Presse führen. Um dieses Problem zu mindern, wird die Schneckenwellenoberfläche mit Materialien mit definierter Oberflächenrauheit versehen, um so eine verringerte Adhäsion der Faserstoffsuspension und damit eine erhöhte Effizienz der Presse zu gewährleisten.

Dazu wurden bisher beispielsweise beschichtete Stahlplatten mit definierten Oberflächenrauheiten auf den Grundkörper der Schneckenwelle aufgeschweißt. Insbesondere in den letzten Windungen des Transportgangs der Förderwendel kurz vor der Auslassöffnung, im sogenannten Hochkompressionsbereich, in dem das Transportgut bereits stark verdichtet und ein Großteil der Flüssigkeit abgetrennt ist, wurden bisher derartige Stahlplatten bzw. Plattensegmente zwischen den Förderwendeln an der Schneckenwelle aufgeschweißt. Nachteilig ist dabei allerdings, dass die Herstellung solcher meist oberflächenbeschichteter Platten, wobei die definierten Oberflächenrauheiten beispielsweise durch thermische Spritzverfahren und nachfolgende Bürstenbearbeitungsschritte erzielt werden, sehr aufwendig ist. Ebenso ist das Aufschweißen der oberflächenrauen Stahlplatten zeit- und kostenintensiv. Außerdem hat sich gezeigt, dass die planmäßigen Standzeiten einer Schneckenpresse zu kurz sind, um die aufgeschweißten Stahlplatten auszutauschen, wenn sich deren Rauigkeit verringert hat bzw. wenn deren raue Oberflächenbeschichtung abgerieben ist. Eine alternative Ausführung ist es gemäß der AT 506 098 eine stufenförmige Oberfläche zu gestalten und gegebenenfalls entsprechende Bänder aufzuschweißen, was ebenfalls längere Standzeiten für den Austausch erfordert.

Weiters sind aus der DE 266 077 Schneckenpressen mit den Merkmalen des Oberbegriffs des Anspruchs 1 bekannt, deren Welle einen Überzug aus Emaille, Quarzit o.dgl. aufweisen. Bei der KR 101049965 B1 werden die Schneckenwendel mit Kobalt oder Wolframkarbid (Tungsten) beschichtet. Die DE 44 08 717 A1 beschreibt Verschleißschutzelemente, die auf den Außenumfang einer Schneckenwendel angebracht werden. Aus der EP 2 848 824 A1 ist eine reibungserhöhende Folie bekannt, die zwischen zwei Bauteilen angeordnet wird, um ein Verschieben der Bauteile zu verhindern.

Es ist daher Aufgabe der vorliegenden Erfindung eine Schneckenpresse bereitzustellen, die die geschilderten Nachteile des Standes der Technik vermeidet, und bei der oberflächenraue Belagsmaterialien an der Schneckenwelle rasch und kostengünstig ausgewechselt werden können.

Erfindungsgemäß wird diese Aufgabe bei einer Schneckenpresse gemäss Anspruch 1, bei einer Verwendung eines Werkstoffs gemäss Anspruch 8 und bei einer Verwendung einer Verbundwerkstoffmatte gemäss Anspruch 9 gelöst.

Besonders bevorzugte Ausführungsformen und Weiterbildungen der Erfindung sind Gegenstand der Unteransprüche.

Generell gilt, dass als Verbundwerkstoff bzw. Kompositwerkstoff Werkstoffe aus zwei oder mehreren miteinander verbundenen Materialien bezeichnet werden, die andere Werkstoffeigenschaften besitzen als deren einzelne Materialkomponenten. Ein im Rahmen der Erfindung vorgeschlagener Verbundwerkstoff, bei dem Hartstoffpartikel gleichmäßig verteilt in einer Matrixkomponente derart eingebettet sind, dass die Hartstoffpartikel eine Oberflächenrauheit des Verbundwerkstoffes gewährleisten, bietet den Vorteil, dass dieser rascher und kostengünstiger herstellbar ist, als es bei den derzeit verwendeten oberflächenbeschichteten Stahlplatten der Fall ist. Außerdem bieten Hartstoffpartikel den Vorteil einer definierten Oberflächenrauheit bzw. eines definierten Reibungsbeiwerts, welche bzw. welcher über die Lebensdauer des Verbundwerkstoffes möglichst gleichbleibend sind. Die Verbindung der Hartstoffpartikel mit der Matrixkomponente, in der sie zumindest teilweise eingebettet sind, erfolgt durch Stoff- oder Formschluss oder eine Kombination von beidem.

Eine im Vergleich zu den Hartstoffpartikeln weichere bzw. flexiblere Matrixkomponente - die beispielsweise aus einem formfesten Kunststoff hergestellt ist - bietet überdies den Vorteil, dass der Verbundwerkstoff an die geometrischen Gegebenheiten des jeweiligen Oberflächenabschnitts der Schneckenwelle besser angepasst werden kann, als dies mit beschichteten Stahlplatten der Fall ist. Außerdem lassen sich Oberflächenabschnitte der Schneckenwelle, die mit einem solchen vergleichsweise flexiblen Verbundwerkstoff bedeckt sind, aufgrund des geringeren Gewichts und der höheren Flexibilität bzw. Biegsamkeit des Verbundwerkstoffs leichter und rascher austauschen.

Durch geeignete Wahl einer Klebeverbindung lässt sich der Verbundwerkstoff mit seiner Unterseite rasch und kostengünstig an einem Oberflächenabschnitt der Schneckenwelle befestigen. Eine Klebeverbindung ist im Vergleich zu einer Schweißverbindung, mit der bisher die oberflächenrauen Stahlplatten an der Schneckenwelle befestigt wurden, jedenfalls billiger herzustellen. Im Rahmen der Erfindung können dazu sämtliche bekannten Varianten von Klebeverbindungen verwendet werden. Beispielsweise wird die Klebeschicht nur an der Unterseite des Verbundwerkstoffs aufgetragen und dieser wird mit der Klebeschicht voraus auf dem entsprechenden Oberflächenabschnitt der Schneckenwelle positioniert bzw. auf diesen gedrückt. Alternativ dazu kann die Klebeschicht auch auf dem entsprechenden Oberflächenabschnitt der Schneckenwelle aufgebracht werden, wobei anschließend der Verbundwerkstoff auf diese Klebeschicht aufgelegt bzw. aufgedrückt wird. Weiters ist im Rahmen der Erfindung auch ein Kontaktklebeverfahren denkbar, wobei beide Klebeflächen - sowohl die Unterseite des Verbundwerkstoffs als auch der zu beklebende Oberflächenabschnitt der Schneckenwelle - jeweils mit demselben Klebstoff oder aber mit unterschiedlichen Klebstoffen beschichtet werden und danach der Verbundwerkstoff auf die Schneckenwelle aufgeklebt wird.

Vorteilhaft kann in einer erfindungsgemäßen Ausführung einer Schneckenpresse die Oberflächenrauheit des Verbundwerkstoffs, mit welcher die Hartstoffpartikel aus der Matrixkomponente hervorragen, von 2 µm bis 20 µm, vorzugsweise von 3 µm bis 10 µm, besonders bevorzugt von 5 µm bis 8 µm, betragen. Der Verbundwerkstoff weist eine definierte Oberflächenrauheit auf, wobei sich die angegebenen Rauheitsmaße auf den Überstand der Hartstoffpartikel gegenüber der Matrixkomponente, in der die Partikel eingebettet sind, beziehen.

In einer Weiterbildung der Erfindung kann der Verbundwerkstoff zumindest eine Verschleißindikatorschicht umfassen, welche Verschleißindikatorschicht innerhalb der Matrixkomponente integriert ist und/oder welche Verschleißindikatorschicht an der Unterseite des Verbundwerkstoffs angeordnet ist. Vorteilhaft dient eine Verschleißindikatorschicht, die beispielsweise eine farblich markierte, gefärbte Polymerschicht umfasst, als Indikator für den Verschleiß des eingesetzten Verbundwerkstoffs.

In einer weiteren vorteilhaften Ausführungsvariante ist bei einer Schneckenpresse der Verbundwerkstoff als Verbundwerkstoffmatte umfassend Hartstoffpartikel, welche gleichmäßig verteilt in einer Matrixkomponente unter Bildung einer Oberflächenrauheit eingebettet sind, sowie weiterhin umfassend eine Klebeschicht an einer Unterseite der Verbundwerkstoffmatte, ausgeführt, wobei die Verbundwerkstoffmatte zumindest an einem Oberflächenabschnitt des Transportganges der Schneckenwelle lösbar angeklebt ist. In dieser besonders einfach zu handhabenden Ausführung ist der Verbundwerkstoff bereits als Verbundwerkstoffmatte vorbereitet, wobei an der Unterseite des Verbundwerkstoffs eine Klebeschicht vorgesehen ist, die beispielsweise mit einer Schutzfolie bedeckt ist. Die Verbundwerkstoffmatte ist somit als selbstklebende Matte ausgeführt, wodurch eine besonders rasche Positionierung und Beklebung der Verbundwerkstoffmatte an einem Oberflächenabschnitt der Schneckenwelle ermöglicht wird. Beispielsweise lassen sich einfach und rasch Schablonen anfertigen, die die jeweilige Steigung der Schneckenwelle bzw. die Geometrie des jeweiligen Transportgangs abbilden und welche als Vorlage für den passgenauen Zuschnitt sowie die Positionierung der entsprechenden Verbundwerkstoffmatten dienen.

In einer weiteren Variante der Erfindung kann bei einer Schneckenpresse die Verbundwerkstoffmatte zumindest eine Verschleißindikatorschicht umfassen, welche innerhalb der Matrixkomponente integriert ist und/oder welche Verschleißindikatorschicht zwischen der Matrixkomponente und der Klebeschicht angeordnet ist. Wie vorhin bereits angeführt, ist auch bei einer Verbundwerkstoffmatte eine Verschleißindikatorschicht, die beispielsweise eine farblich markierte, gefärbte Polymerschicht umfasst, als Indikator für den Verschleiß des eingesetzten Verbundwerkstoffs von Vorteil.

Besonders vorteilhaft sind bei einer erfindungsgemäßen Schneckenpresse an der Schneckenwelle zumindest an mehreren Oberflächenabschnitten eines Transportganges jeweils Verbundwerkstoffmatten mit einer Oberflächenrauheit von 2 µm bis 20 µm, vorzugsweise von 3 µm bis 10 µm, besonders bevorzugt von 5 µm bis 8 µm, lösbar angeklebt. Durch Bekleben der Schneckenwelle mit Verbundwerkstoffmatten werden vorteilhaft das Anhaften sowie die Mitrotation des zu pressenden Transportguts, beispielsweise Zellstofffasern, an der Schneckenwellenoberfläche verhindert und die Effizienz der Schneckenpresse erhöht.

Zweckmäßig sind in einer weiteren Ausführungsvariante einer erfindungsgemäßen Schneckenpresse mehrere Verbundwerkstoffmatten, vorzugsweise drei oder vier Verbundwerkstoffmatten, aneinander angrenzend an benachbarten Oberflächenabschnitten eines Transportganges der Schneckenwelle lösbar angeklebt. Zur leichteren Handhabung werden in den entsprechenden Windungen des Transportgangs der Förderwendel mehrere Verbundwerkstoffmatten aneinander angrenzend an der Schneckenwelle festgeklebt. Insbesondere im Hochkompressionsbereich der Schneckenpresse kann solcherart die Schneckenwelle rasch und einfach mit Verbundwerkstoffmatten mit definierter Oberflächenrauheit beklebt werden. Auch hier können gegebenenfalls Schablonen zur exakten Konfektionierung sowie Positionierung der Verbundwerkstoffmatten dienen.

Vorteilhaft ist bei einer erfindungsgemäßen Schneckenpresse die Matrixkomponente des Verbundwerkstoffs, in welcher die Hartstoffpartikel unter Bildung einer Oberflächenrauheit eingebettet sind, aus einem Elastomer, vorzugsweise einem thermoplastischen Elastomer, hergestellt. Durch die gleichmäßig in der weicheren, elastischen Matrixkomponente aus Elastomer oder einem thermoplastischen Elastomer verteilten Hartstoffpartikel lässt sich eine definierte und möglichst langlebige Oberflächenrauheit des Verbundwerkstoffs bzw. der Verbundwerkstoffmatte erzielen.

Im Rahmen der Erfindung ist auch die Verwendung eines Verbundwerkstoffs gemäss Anspruch 8 vorgesehen.

Verwendung einer selbstklebend ausgerüsteten Verbundwerkstoffmatte ist besonders praktisch und einfach in der Handhabung. Zum Bekleben muss beispielsweise nur eine Schutzfolie, mit der die Klebeschicht an der Unterseite der Verbundwerkstoffmatte bedeckt ist, abgezogen werden, und die Verbundwerkstoffmatte kann anschließend an einem Oberflächenabschnitt der Schneckenwelle positioniert und aufgeklebt werden.

Vorteilhaft ist bei der Verwendung eines Verbundwerkstoffs und/oder einer Verbundwerkstoffmatte, wenn die Oberflächenrauheit, mit der die Hartstoffpartikel aus der Matrixkomponente hervorragen, von 2 µm bis 20 µm, vorzugsweise von 3 µm bis 10 µm, besonders bevorzugt von 5 µm bis 8 µm, beträgt.

Im Rahmen der Erfindung ist es aber auch möglich, einen Verbundwerkstoff und/oder eine Verbundwerkstoffmatte zu verwenden, wobei die Matrixkomponente des Verbundwerkstoffs, in welcher die Hartstoffpartikel unter Bildung einer Oberflächenrauheit eingebettet sind, aus einem Elastomer, vorzugsweise einem thermoplastischen Elastomer, hergestellt ist. Durch das im Vergleich zu Stahlplatten geringere Gewicht und die hohe Flexibilität des Verbundwerkstoffs bzw. der Verbundwerkstoffmatte können Oberflächenabschnitte der Schneckenwelle solcherart besonders rasch und einfach mit dem Verbundwerkstoff mit definierter Oberflächenrauheit versehen werden.

Weitere Einzelheiten, Merkmale und Vorteile der Erfindung ergeben sich aus der nachfolgenden Erläuterung von in den Zeichnungen schematisch dargestellten Ausführungsbeispielen. In den Zeichnungen zeigen:
- Fig. 1 in einer teilweisen Schnittansicht von der Seite eine erste Ausführung einer erfindungsgemäßen Schneckenpresse;
- Fig. 2 in einer teilweisen Schnittansicht von der Seite ein Detail einer zweiten Ausführung einer erfindungsgemäßen Schneckenpresse;
- Fig. 3 in einer teilweisen Schnittansicht in isometrischer Darstellung den jeweils in den Figuren 1 und 2 markierten Detailausschnitt A in einer vergrößerten Ansicht.

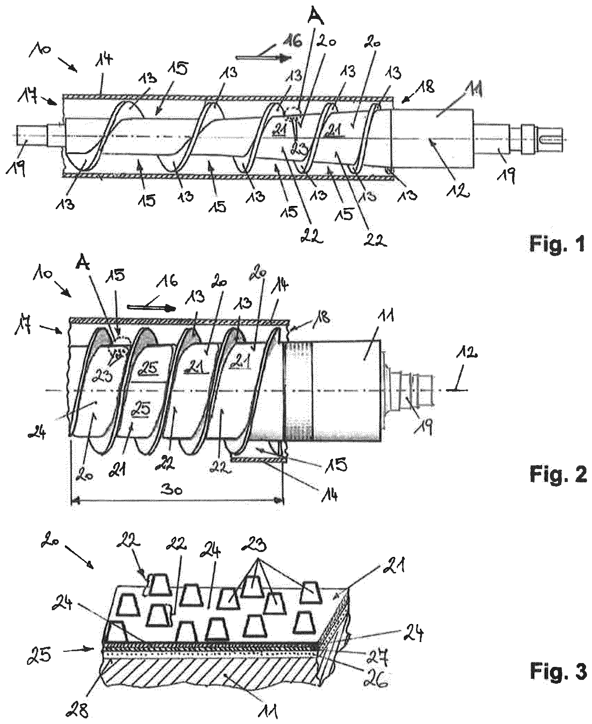

Fig. 1 zeigt eine erfindungsgemäße Schneckenpresse 10, welche eine Schneckenwelle 11 mit einer Schneckenwellenachse 12 umfasst, wobei die Schneckenwelle 11 eine spiral- bzw. schraubenförmig verlaufende Förderwendel 13 aufweist, die bis an eine Innenseite eines äußeren Gehäusemantels 14 reicht. Zwischen dem Gehäusemantel 14 und der Schneckenwelle 11 bzw. der daran angeordneten Förderwendel 13 ist ein Transportgang 15 ausgebildet, durch den ein zu pressendes Fördergut in einer Förderrichtung 16 von einer Einlassöffnung 17 im Gehäusemantel 14 bis zu einer Auslassöffnung 18 transportiert wird. Durch geeignete Wahl der Geometrie der Schneckenwelle 11, die beispielsweise in stromabwärtiger Förderrichtung 16 zur Auslassöffnung 18 hin konisch ansteigend ausgeführt ist, sowie durch geeignete Wahl der Steigung der Förderwendel 13 wird eine freie Querschnittsfläche des Transportgangs 15 in Förderrichtung 16 sukzessive verringert.

Die Schneckenwelle 11 ist mit mehreren Wellenzapfen 19 in (nicht dargestellten) Lagern drehbar um die Schneckenwellenachse 12 gelagert und mit einem nicht gezeigten Antrieb versehen. Durch diese Antriebseinrichtung ist die Schneckenwelle 11 in Rotation versetzbar, wobei das Transportgut durch den sich in Förderrichtung 16 verjüngenden spiralförmigen Transportgang 15 hindurch geführt wird und das Transportgut hierbei eine fortschreitende Entwässerung erfährt.

Um dabei die vom Transportgut abgeschiedene Flüssigkeit abzuführen, sind im Gehäusemantel 14 nicht dargestellte Flüssigkeitsdurchtritte vorgesehen, welche beispielsweise schlitz- oder lochförmig ausgeführt sind. Die durch die Flüssigkeitsdurchtritte abfließende Flüssigkeit wird in einer dafür vorgesehenen Auffangvorrichtung gesammelt.

Um das Anhaften des Transportguts - beispielsweise seien hier Faserstoff- oder Schlammsuspensionen genannt - an der Oberfläche der Schneckenwelle 11 zu verhindern bzw. um einen durch derartige Materialien verursachten Abrieb der Schneckenwelle 11 mit den eingangs bereits genannten Nachteilen zu verringern, ist an zumindest einem Oberflächenabschnitt 20 der Schneckenwelle 11 innerhalb des Transportganges 15 ein Verbundwerkstoff 21 mit einer definierten Oberflächenrauheit 22 stoffschlüssig befestigt. Der Verbundwerkstoff 21 umfasst Hartstoffpartikel 23, welche gleichmäßig verteilt in einer Matrixkomponente 24 des Verbundwerkstoffs 21 unter Bildung einer Oberflächenrauheit 22 eingebettet sind.

Wie Fig. 3 zu entnehmen ist, welche in einer vergrößerten Ansicht den in Fig. 1 markierten Detailausschnitt A veranschaulicht, erfolgt die stoffschlüssige Befestigung des Verbundwerkstoffs 21 hier durch Verkleben mit einer Klebeschicht 26, die an einer Unterseite 28 des Verbundwerkstoffs 21 aufgebracht wird oder die alternativ an dem entsprechenden Oberflächenabschnitt 20 der Schneckenwelle 11 aufgebracht wird, bevor der Verbundwerkstoff 21 auf die Klebeschicht 26 gedrückt wird. Ebenso ist es im Rahmen der Erfindung denkbar, dass sowohl an der Unterseite 28 des Verbundwerkstoffs 21 als auch am entsprechend korrespondierenden Oberflächenabschnitt 20 der Schneckenwelle 11 Klebeschichten 26 desselben Klebstoffs oder aber unterschiedlicher Klebstoffe nach dem Prinzip eines Kontaktklebers aufgetragen werden.

Wie weiters in Fig. 3 vergrößert zu erkennen ist, ragen die Hartstoffpartikel 23 um eine definierte Oberflächenrauheit 22, die hier beispielsweise etwa von 5 µm bis 8 µm beträgt, aus der Matrixkomponente 24 hervor. Die Matrixkomponente 24 ist hier aus einem thermoplastischen Elastomer hergestellt. Die Hartstoffpartikel 23 sind somit vorteilhaft in einer vergleichsweise weicheren, elastischen Matrixkomponente eingebettet, wodurch der Verschleiß der Hartstoffpartikel 23 verringert und die Lebensdauer des oberflächenrauen Verbundwerkstoffs 21 verlängert wird.

Als Verschleißanzeige ist hier eine Verschleißindikatorschicht 27 innerhalb der Matrixkomponente 24 integriert bzw. zwischen der Matrixkomponente 24 und der Klebeschicht 26 angeordnet. Die Verschleißindikatorschicht 27 umfasst beispielsweise eine farblich markierte, gefärbte Polymerschicht, die sichtbar wird, wenn die Hartstoffpartikel 23 abgerieben sind.

Fig. 2 zeigt eine weitere Ausführungsvariante einer erfindungsgemäßen Schneckenpresse 10, wobei hier Oberflächenabschnitte 20 der Schneckenwelle 11 innerhalb des Transportganges 15 mit Verbundwerkstoffmatten 25, welche einen Verbundwerkstoff 21 mit einer definierten Oberflächenrauheit 22 umfassen, beklebt sind. Zusätzlich ist an der Unterseite 28 der Verbundwerkstoffmatten 25 bereits eine Klebeschicht 26 angeordnet, die Verbundwerkstoffmatten 25 sind daher selbstklebend ausgerüstet und besonders praktisch zum Bekleben der Schneckenwelle 11. Die Klebeschicht 26 ist dazu beispielsweise mit einer nicht dargestellten Schutzfolie bedeckt, die vor dem Verlegen der Verbundwerkstoffmatten 25 abzuziehen ist.

Die mehreren Verbundwerkstoffmatten 25 sind in Fig. 2 aneinander angrenzend an benachbarten Oberflächenabschnitten 20 der Schneckenwelle 11 innerhalb der Windungen des Transportganges 15, welche im Hochkompressionsbereich 30 der Schneckenpresse 10 liegen, solcherart angeklebt, dass diese nach einer bestimmten Lebensdauer bzw. verschleißabhängig einfach und rasch abgelöst und gegen neue Verbundwerkstoffmatten 25 ausgewechselt werden können.

Analog zu Fig. 1 ist auch der in Fig. 2 markierte Detailausschnitt A in Fig. 3 in einer vergrößerten Ansicht veranschaulicht. Im Unterschied zu Fig. 1, wo bei einem Verbundwerkstoff 21 die Klebeschicht 26 zusätzlich an der Unterseite 28 des Verbundwerkstoffs 21 - oder direkt auf der Schneckenwelle 11 - aufgetragen werden muss, ist beim Einsatz einer Verbundwerkstoffmatte 25 die Klebeschicht 26 bereits auf der Unterseite 28 der Verbundwerkstoffmatte 25 aufgetragen. Somit stellt Fig. 3 im Prinzip sowohl den fertigen Schichtenaufbau eines aufgeklebten Verbundwerkstoffs 21, als auch den einer verklebten Verbundwerkstoffmatte 25 dar.

## Patentansprüche

1. Schneckenpresse (10) zum Abscheiden von Flüssigkeit aus einem Transportgut, umfassend eine Schneckenwelle (11) samt einer spiralförmig an der Schneckenwelle (11) angeordneten Förderwendel (13) sowie einen diese umgebenden Gehäusemantel (14), wobei zwischen der Schneckenwelle (11), der Förderwendel (13) und dem Gehäusemantel (14) ein Transportgang (15) für das zu befördernde Transportgut ausgebildet ist, **dadurch gekennzeichnet, dass** an zumindest einem Oberflächenabschnitt (20) der Schneckenwelle (11) innerhalb des Transportganges (15) ein Verbundwerkstoff (21) umfassend Hartstoffpartikel (23), welche gleichmäßig verteilt in einer Matrixkomponente (24) unter Bildung einer Oberflächenrauheit (22) eingebettet sind, stoffschlüssig befestigt ist, wobei der Verbundwerkstoff (21) an seiner Unterseite (28) mit einer Klebeschicht (26) an der Schneckenwelle (11) lösbar angeklebt ist.

2. Schneckenpresse (10) nach Anspruch 1, **dadurch gekennzeichnet, dass** der Verbundwerkstoff (21) als Verbundwerkstoffmatte (25) umfassend Hartstoffpartikel (23), welche in einer Matrixkomponente (24) unter Bildung einer Oberflächenrauheit (22) eingebettet sind, sowie weiterhin umfassend eine Klebeschicht (26) an einer Unterseite (28) der Verbundwerkstoffmatte (25), ausgeführt ist, wobei die Verbundwerkstoffmatte (25) zumindest an einem Oberflächenabschnitt (20) der Schneckenwelle (11) lösbar angeklebt ist.

3. Schneckenpresse (10) nach einem der Ansprüche 1 bis 2, **dadurch gekennzeichnet, dass** die Oberflächenrauheit (22) des Verbundwerkstoffs (21) oder der Verbundwerkstoffmatte (25), mit welcher die Hartstoffpartikel (23) aus der Matrixkomponente (24) hervorragen, von 2 µm bis 20 µm, vorzugsweise von 3 µm bis 10 µm, besonders bevorzugt von 5 µm bis 8 µm, beträgt.

4. Schneckenpresse (10) nach einem der Ansprüche 1 bis 3, **dadurch gekennzeichnet, dass** der Verbundwerkstoff (21) oder die Verbundwerkstoffmatte (25) zumindest eine Verschleißindikatorschicht (27) umfasst, welche Verschleißindikatorschicht (27) innerhalb der Matrixkomponente (24) integriert ist und/oder welche Verschleißindikatorschicht (27) an der Unterseite (28) des Verbundwerkstoffs (21) angeordnet ist.

5. Schneckenpresse (10) nach einem der Ansprüche 2 bis 4, **dadurch gekennzeichnet, dass** mehrere Verbundwerkstoffmatten (25) aneinander angrenzend an benachbarten Oberflächenabschnitten (20) der Schneckenwelle (11) innerhalb eines Transportganges (15) lösbar angeklebt sind.

6. Schneckenpresse nach Anspruch 5, **dadurch gekennzeichnet, dass** drei oder vier Verbundwerkstoffmatten (25) aneinander angrenzend an benachbarten Oberflächenabschnitten (20) der Schneckenwelle (11) innerhalb eines Transportganges (15) lösbar angeklebt sind.

7. Schneckenpresse (10) nach einem der Ansprüche 1 bis 6, **dadurch gekennzeichnet, dass** die Matrixkomponente (24) des Verbundwerkstoffs (21), in welcher die Hartstoffpartikel (23) unter Bildung einer Oberflächenrauheit (22) eingebettet sind, aus einem Elastomer, vorzugsweise einem thermoplastischen Elastomer, hergestellt ist.

8. Verwendung eines Verbundwerkstoffs (21) umfassend Hartstoffpartikel (23), welche gleichmäßig verteilt in einer Matrixkomponente (24) unter Bildung einer Oberflächenrauheit (22) eingebettet sind, zur stoffschlüssigen Befestigung (26) an zumindest einem Oberflächenabschnitt (20) einer Schneckenwelle (11) einer Schneckenpresse (10), wobei der Verbundwerkstoff (21) mit einer Klebeschicht (26) an dem zumindest einen Oberflächenabschnitt (20) einer Schneckenwelle (11) lösbar anklebbar ist.

9. Verwendung einer Verbundwerkstoffmatte (25) umfassend Hartstoffpartikel (23), welche gleichmäßig verteilt in einer Matrixkomponente (24) unter Bildung einer Oberflächenrauheit (22) eingebettet sind, sowie weiterhin umfassend eine Klebeschicht (26) an einer Unterseite (28) der Verbundwerkstoffmatte (25), zum lösbaren Bekleben an zumindest einem Oberflächenabschnitt (20) einer Schneckenwelle (11) einer Schneckenpresse (10), wobei eine Verschleißindikatorschicht (27) innerhalb der Matrixkomponente (24) integriert ist und/oder zumindest eine Verschleißindikatorschicht (27) zwischen der Matrixkomponente (24) und der Klebeschicht (26) angeordnet ist.

10. Verwendung eines Verbundwerkstoffs (21) nach Anspruch 8 und/oder einer Verbundwerkstoffmatte (25) nach Anspruch 9, **dadurch gekennzeichnet, dass** die Oberflächenrauheit (22), mit der die Hartstoffpartikel (23) aus der Matrixkomponente (24) hervorragen, von 2 µm bis 20 µm, vorzugsweise von 3 µm bis 10 µm, besonders bevorzugt von 5 µm bis 8 µm, beträgt.

11. Verwendung eines Verbundwerkstoffs (21) und/oder einer Verbundwerkstoffmatte (25) nach Anspruch 10, **dadurch gekennzeichnet, dass** die Matrixkomponente (24) aus einem thermoplastischen Elastomer hergestellt ist.

## Claims

1. Screw press (10) for removing liquid from a material to be conveyed, comprising a screw shaft (11) complete with a spiral-shaped conveying flight (13) mounted on the screw shaft (11) and a housing shell (14) surrounding it, where a transport channel (15) is formed for the material to be conveyed between the screw shaft (11), the conveying flight (13) and the housing shell (14), **characterised in that** a composite material (21) containing hard material particles (23) that are evenly distributed and embedded into a matrix component (24) to form a rough surface (22) is secured in a material-locked connection to at least one surface section (20) of the screw shaft (11) within the transport channel (15), where the underside (28) of the composite material (21) is glued detachably to the screw shaft (11) by an adhesive layer (26).

2. Screw press (10) according to claim 1, **characterised in that** the composite material (21) is designed as a composite material mat (25) containing hard material particles (23) embedded into a matrix component (24) to form a rough surface (22) and also comprises an adhesive layer (26) on an underside (28) of the composite material mat (25), where the composite material mat (25) is glued detachably to at least one surface section (20) of the screw shaft (11).

3. Screw press (10) according to one of claims 1 to 2, **characterised in that** the surface roughness (22) of the composite material (21) or the composite material mat (25) with which the hard material particles (23) protrude from the matrix component (24) amounts to between 2 µm and 20 µm, preferably 3 µm to 10 µm, particularly preferably 5 µm to 8 µm.

4. Screw press (10) according to one of claims 1 to 3, **characterised in that** the composite material (21) or the composite material mat (25) comprises at least one wear indicator layer (27) that is integrated into the matrix component (24) and/or disposed on the underside (28) of the composite material (21).

5. Screw press (10) according to one of claims 2 to 4, **characterised in that** several composite material mats (25) adjacent to one another are glued detachably to adjacent surface sections (20) of the screw shaft (11) within a transport channel (15).

6. Screw press (10) according to claim 5, **characterised in that** three or four composite material mats (25) adjacent to one another are glued detachably to adjacent surface sections (20) of the screw shaft (11) within a transport channel (15).

7. Screw press (10) according to one of claims 1 to 6, **characterised in that** the matrix component (24) of the composite material (21) into which the hard material particles (23) are embedded to form a rough surface (22) is made of an elastomer, preferably a thermoplastic elastomer.

8. Use of a composite material (21) comprising hard material particles (23), which are distributed evenly and embedded into a matrix component (24) to form a rough surface (22), for a material-locked connection (26) to at least one surface section (20) of a screw shaft (11) in a screw press (10), where the composite material (21) can be glued detachably with an adhesive layer (26) to the at least one surface section (20) of a screw shaft (11).

9. Use of a composite material mat (25) containing hard material particles (23), which are distributed evenly and embedded into a matrix component (24) to form a rough surface (22), and also comprising an adhesive layer (26) on an underside (28) of the composite material mat (25) for detachable gluing to at least one surface section (20) of a screw shaft (11) in a screw press (10), where a wear indicator layer (27) is integrated into the matrix component (24) and/or at least one wear indicator layer (27) is disposed between the matrix component (24) and the adhesive layer (26).

10. Use of a composite material (21) according to claim 8 and/or a composite material mat (25) according to claim 9, **characterised in that** the surface roughness (22) with which the hard material particles (23) protrude from the matrix component (24) amounts to between 2 µm and 20 µm, preferably 3 µm to 10 µm, particularly preferably 5 µm to 8 µm.

11. Use of a composite material (21) and/or a composite material mat (25) according to claim 10, **characterised in that** the matrix component (24) is made of a thermoplastic elastomer.

## Revendications

1. Presse à vis (10) pour séparer un liquide à partir d'un produit transporté, comprenant un arbre (11) de vis avec une hélice de transport (13) hélicoïdale disposée sur l'arbre (11) de vis ainsi qu'une enveloppe de logement (14) entourant celle-ci, entre l'arbre (11) de vis, l'hélice de transport (13) et l'enveloppe de logement (14) étant formé un passage de transport (15) pour transporter le produit transporté, **caractérisée en ce que** sur au moins une partie de surface (20) de l'arbre (11) de vis à l'intérieur du passage de transport (15) est fixé par complémentarité de matière, un matériau composite (21) comprenant des particules dures (23) qui, uniformément réparties, sont incorporées dans un composant de base (24) pour former une rugosité de la surface (22), le matériau composite (21) sur sa face inférieure (28) étant collé de manière amovible par une couche d'adhésive (26) à l'arbre (11) de vis.

2. Presse à vis (10) selon la revendication 1, **caractérisée en ce que** le matériau composite (21) se présente sous la forme d'une bande de matériau composite (25) comprenant des particules dures (23) qui sont incorporées dans un composant de base (24) pour former une rugosité de la surface (22) et comprenant également une couche adhésive (26) sur une face inférieure (28) de la bande de matériau composite (25), la bande de matériau composite (25) étant collée de manière amovible au moins sur une partie de surface (20) de l'arbre (11) de vis.

3. Presse à vis (10) selon l'une des revendications 1 à 2, **caractérisé en ce que** la rugosité de la surface (22) du matériau composite (21) ou de la bande de matériau composite (25) avec laquelle les particules dures (23) font saillie du composant de base (24), s'élève de 2 µm à 20 µm, de préférence de 3 µm à 10 µm, en particulier de 5 µm bis 8 µm.

4. Presse à vis (10) selon l'une quelconque des revendications 1 à 3, **caractérisée en ce que** le matériau composite (21) ou la bande de matériau composite (25) comprend au moins une couche d'indication d'usure (27), ladite couche d'indication d'usure (27) étant intégrée à l'intérieur du composant de base (24) et/ou ladite couche d'indication d'usure (27) étant disposée sur la face inférieure (28) du matériau composite (21).

5. Presse à vis (10) selon l'une quelconque des revendications 2 à 4, **caractérisée en ce que** plusieurs bandes de matériau composite (25) sont collées de manière amovible les unes aux autres de manière adjacente aux parties de surface voisines (20) de l'arbre (11) de vis à l'intérieur du passage de transport (15).

6. Presse à vis selon la revendication 5, **caractérisée en ce que** trois ou quatre bandes de matériau composite (25) étant collées de manière amovible les unes aux autres de manière adjacente aux parties de surface voisines (20) de l'arbre (11) de vis à l'intérieur du passage de transport (15).

7. Presse à vis (10) selon l'une quelconque des revendications 1 à 6, **caractérisée en ce que** le composant de base (24) du matériau composite (21) dans lequel les particules dures (23) sont incorporées pour former une rugosité de la surface (22), est fabriqué à partir d'un élastomère, de préférence un élastomère thermoplastique.

8. Utilisation d'un matériau composite (21) comprenant des particules dures (23), qui sont incorporées uniformément dans un composant de base (24) pour former une rugosité de la surface (22), pour la fixation par complémentarité de matière (26) à au moins une partie de surface (20) d'un arbre (11) de vis d'une presse à vis (10), le matériau composite (21) étant collé de manière amovible par une couche adhésive (26) sur ladite partie de surface (20) d'un arbre (11) de vis.

9. Utilisation d'une bande de matériau composite (25) comprenant des particules dures (23), qui sont incorporées uniformément dans un composant de base (24) pour former une rugosité de la surface (22) et comprenant également une couche adhésive (26) sur une face inférieure (28) de la bande de matériau composite (25) pour se coller de manière amovible à au moins une partie de surface (20) d'un arbre (11) de vis d'une presse à vis (10), une couche d'indication d'usure (27) étant intégrée à l'intérieur du composant de base (24) et/ou au moins une couche d'indication d'usure (27) étant disposée entre le composant de base (24) et la couche adhésive (26).

10. Utilisation d'un matériau composite (21) selon la revendication 8 et/ou d'une bande de matériau composite (25) selon la revendication 9, **caractérisée en ce que** la rugosité de la surface (22), avec laquelle les particules dures (23) font saillie du composant de base (24), s'élève de 2 µm à 20 µm, de préférence de 3 µm à 10 µm, en particulier de 5 µm à 8 µm.

11. Utilisation d'un matériau composite (21) et/ou d'une bande de matériau composite (25) selon la revendication 10, **caractérisée en ce que** le composant de base (24) est fabriqué à partir d'un élastomère thermoplastique.
